# FASCICULE DE BREVET EUROPEEN

(11) **EP 1 541 443 B1**
(45) Date de publication et mention de la délivrance du brevet: **21.06.2006**
(21) Numéro de dépôt: 04360103.8
(22) Date de dépôt: 10.12.2004
(51) Int. Cl.: B62B 1/20, B62B 1/22

(54) **Brouette en matière synthétique**
Schubkarre aus Kunststoff
Wheelbarrow made of plastic

(30) Priorité: 12.12.2003 FR 0314634
(43) Date de publication de la demande: 15.06.2005
(73) Titulaire: Haemmerlin SAS, 67700 Monswiller (FR)
(72) Inventeur: Haemmerlin, Bernard, 67000 Strasbourg (FR); Lotz, Dominque, 67490 Dettwiller (FR)
(74) Mandataire: Nuss, Pierre

(56) Documents cités:
- DE-U- 9 109 956
- GB-A- 837 228
- GB-A- 2 241 204
- GB-A- 2 327 261
- US-A- 4 645 225
- US-A- 4 955 625
- US-A- 5 615 903

## Description

La présente invention concerne le domaine des dispositifs de manutention, et plus particulièrement celui des brouettes, et a pour objet une brouette ou analogue à caisse en matière synthétique.

Les brouettes de chantier ou de jardin connues actuellement sont généralement réalisées sous forme d'un assemblage d'une caisse, de brancards, d'un ensemble pieds et paliers de roue et d'une roue.

La caisse des brouettes actuelles est le plus souvent réalisée en tôle emboutie et est fixée sur l'infrastructure par boulonnage. Une telle caisse en tôle présente généralement une bonne tenue dans le temps, ainsi qu'une bonne rigidité, de sorte que les brouettes ainsi équipées sont très fiables et très résistantes.

Cependant, la réalisation des caisses en tôle présente l'inconvénient de rendre ces brouettes relativement bruyantes à l'usage et, du fait de leur réalisation en métal, elles sont d'un poids relativement élevé, rendant leur utilisation pénible pour les petits travaux, par exemple de jardinage et d'entretien.

Pour obvier à ces inconvénients, il a été proposé d'utiliser une caisse en matière synthétique, également fixée sur l'infrastructure par boulonnage. Une telle caisse permet d'alléger sensiblement les brouettes ainsi équipées et de rendre leur utilisation, en particulier pour des travaux légers, plus agréable.

Toutefois, les caisses en matière synthétique utilisées actuellement présentent l'inconvénient d'être relativement fragiles et peu rigides, de sorte que leur manque de fiabilité nuit grandement à une large utilisation, notamment pour le jardinage de loisir.

Enfin, les caisses des brouettes existantes, qu'elles soient en matière synthétique ou en métal, ne sont généralement pas adaptées à remplir des fonctions complémentaires, de rangement et/ou de support provisoire d'objets ou encore de réalisation de compartiments destinés à des utilisations particulières. Une brouette ayant les caractéristiques du préambule de la revendication indépendante est connue, par exemple du US-A-4 955 625 qui représente l'état de la technique le plus proche.

La présente invention a pour but de pallier ces inconvénients en proposant une brouette ou analogue à caisse en matière synthétique permettant de remplir différentes fonctions, tout en présentant une rigidité comparable à celle des caisses en tôle.

A cet effet, la brouette est caractérisée en ce que la caisse présente un bord avec retombée et est munie, en outre, d'au moins un dispositif de support et de maintien d'outillages, ainsi que d'un double fond amovible épousant les contours internes de la caisse à une certaine distance du fond de celle-ci.

L'invention sera mieux comprise, grâce à la description ci-après, qui se rapporte à un mode de réalisation préféré, donnés à titre d'exemples non limitatifs, et expliqués avec référence aux dessins schématiques annexés, dans lesquels :
la figure 1 est une vue en élévation latérale d'une brouette conforme à l'invention ;
la figure 2 est une vue de dessus conforme à la figure 1 ;
la figure 3 est une vue en perspective par le dessous de la brouette suivant la figure 1 ;
les figures 4 et 5 sont des vues partielles en perspective, à plus grande échelle, des détails A et B de la figure 3, et
la figure 6 est une vue en perspective du double fond.

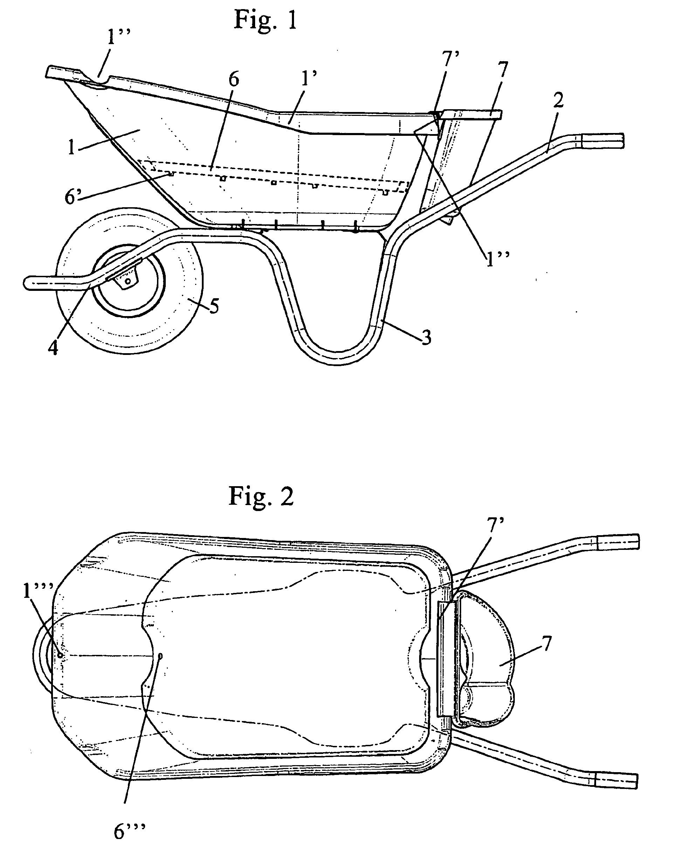

Les figures 1 à 3 des dessins annexés représentent une brouette constituée par une caisse 1 montée sur un ensemble brancards 2 - pieds 3 - paliers de roue 4 et par une roue 5.

Conformément à l'invention, la caisse 1 est en matière synthétique, présente un bord avec retombée 1'et est munie, en outre, d'au moins un dispositif 1" de support et de maintien d'outillages, ainsi que d'un double fond amovible 6 épousant les contours internes de la caisse 1 à une certaine distance du fond de celle-ci. La retombée 1' du bord de la caisse 1 permet d'améliorer la rigidité de ce bord et d'empêcher ainsi une déformation de la caisse 1 sous charge, en particulier au niveau de sa périphérie.

Selon une caractéristique de l'invention, la caisse 1 présente une hauteur importante par rapport à son volume de chargement. Une telle réalisation d'une caisse haute permet d'améliorer encore la rigidité de ladite caisse et d'empêcher, en particulier, sa déformation près du bord supérieur par répartition des contraintes sur une plus grande hauteur de paroi.

Conformément à une autre caractéristique de l'invention, le bord de la caisse 1 peut avantageusement être pourvu d'un renfort périphérique sous forme d'un canal creux moulé par injection de gaz. Un tel canal creux périphérique permet d'améliorer sensiblement la rigidité du bord de la caisse 1.

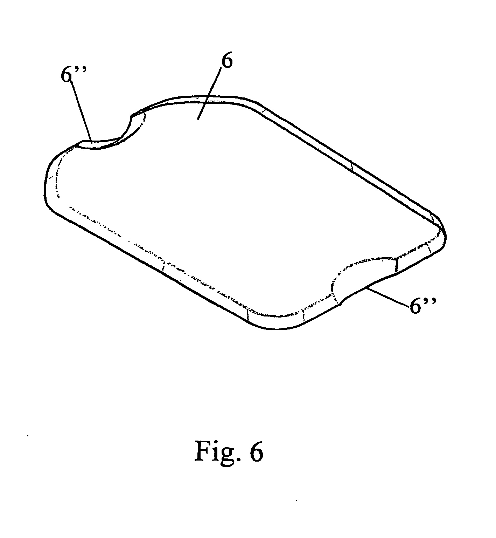

Le double-fond amovible 6 épousant les contours internes de la caisse 1 est avantageusement également réalisé en matière synthétique rigide et est pourvu, en outre, d'une armature de renforcement et de rigidification 6' sur sa face tournée vers le fond de la caisse 1 (figure 1). Ce double-fond amovible 6 est muni, en outre, sur deux côtés opposés, d'ouvertures de préhension 6" (figures 2 et 6). Ces dernières sont destinées à permettre le passage d'une main pour saisir ledit double-fond amovible 6 en vue de sa sortie hors de la caisse 1, ainsi que pour sa remise en place dans ladite caisse 1.

Ce double fond amovible 6 permet, par exemple, de disposer dans le fond de la caisse 1 certains matériaux et de les recouvrir pendant le transport avec le double fond amovible 6, qui peut alors servir de support à de petits outillages ou à d'autres matériaux. Ainsi, par exemple, pour des travaux de jardinage, il est possible de disposer dans le fond de la caisse 1 du terreau et/ou de la terre et de disposer sur le double fond amovible 6 des petits outillages de jardinage, ainsi que des pots de fleurs ou analogues.

Les dispositifs 1" de support et de maintien d'outillages sont avantageusement prévus dans les bords transversaux de la caisse 1, près des extrémités de liaison avec les bords longitudinaux (figures 1 et 2) et se présentent sous forme d'évidements ménagés dans lesdits bords. Ces dispositifs 1" sous forme d'évidements permettent notamment de loger des manches d'outils à manches longues, telles que des pelles, des bèches, des râteaux, etc.... Ainsi, ces outils, qui sont généralement difficiles à ranger dans une brouette sans provoquer de gène pour l'utilisateur, sont parfaitement disposés et maintenus sur la caisse 1, tout en laissant entièrement disponible le volume de cette dernière et sans occasionner de gène pour l'utilisateur, pendant le transport.

Le double fond 6, qui est monté de manière amovible dans la caisse 1, peut servir, après son extraction de cette dernière et disposition en travers sur la caisse 1, de plan de travail, par exemple, pour des opérations de rempotage ou autre.

Selon une autre caractéristique de l'invention, et comme le montrent les figures 1 à 3 des dessins annexés, la caisse 1 peut être pourvue, en outre, d'un ou de plusieurs bacs à outils amovibles 7 munis d'un moyen d'accrochage 7' sous forme de crochets ou d'un rebord en cornière coopérant avec le bord supérieur de la caisse 1. Un tel bac à outils 7 peut être disposé préférentiellement, comme le montrent les figures 1 à 3, sur le bord arrière de la caisse 1, mais peut également être monté sur les côtés de ladite caisse 1. Ce bac 7 peut être prévu préférentiellement pour la réception de petits outils de jardinage ou autres, mais peut également servir, éventuellement, à la réception de matériaux tels que des engrais ou autres.

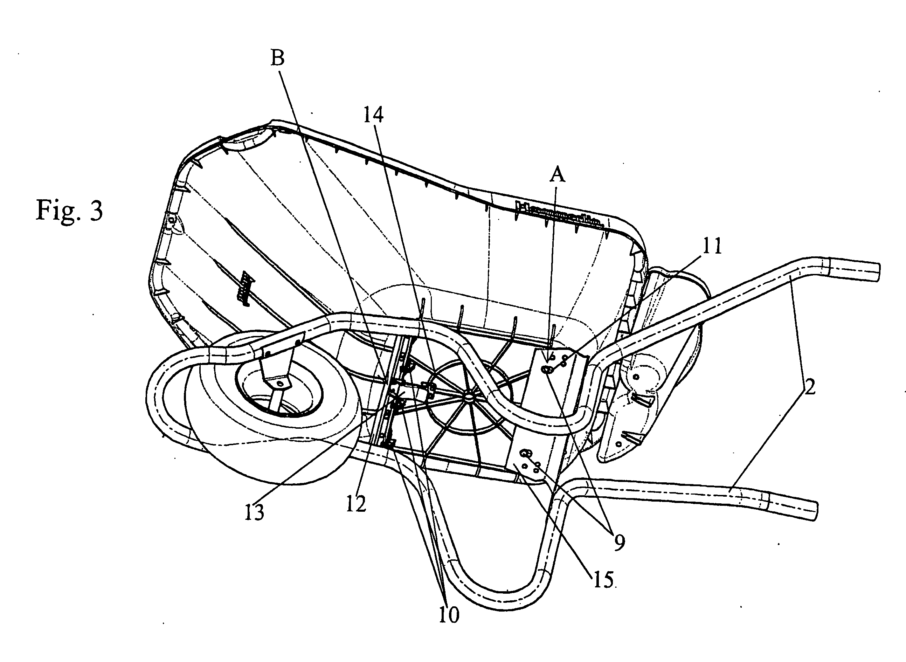

Conformément à une autre caractéristique de l'invention, et comme le montrent plus particulièrement les figures 3 à 5 des dessins annexés, la caisse 1 est avantageusement montée sur l'ensemble brancards 2 - pieds 3 - paliers de roue 4 et roue 5 de manière amovible, par l'intermédiaire d'un dispositif de fixation rapide 8 essentiellement constitué par des tenons à gorge 9 et des crochets 10 prévus sous le fond de la caisse 1 et coopérant respectivement avec des oeillets 11 et une traverse 12 dudit ensemble brancards 2 - pieds 3 - paliers de roue 4 et roue 5 et par un moyen élastique de verrouillage 13 prévu sur la traverse 12 et coopérant avec une nervure 14 de la face inférieure du fond de la caisse 1. Les oeillets 11 coopérant avec les tenons à gorge 9 sont réalisés dans une entretoise en tôle 15 reliant les brancards 2 (figure 3).

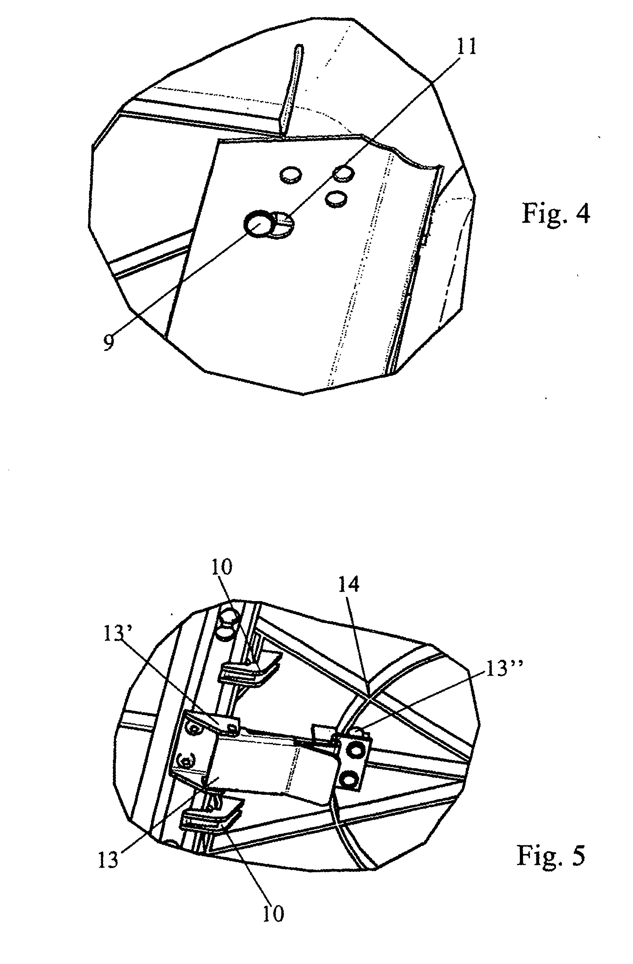

La figure 4 des dessins annexés, qui est une représentation à plus grande échelle du détail A de la figure 3, fait ressortir parfaitement la coopération entre un oeillet 11 et un tenon à gorge 9, alors que la figure 5 représente, détail B, la coopération entre des crochets 10 et la traverse 12, ainsi que le moyen élastique de verrouillage 13 coopérant avec une nervure 14 s'étendant sous le fond de la caisse 1. Ce moyen de verrouillage peut, comme représenté sur la figure 5, se présenter sous forme d'une patte élastique chargée par ressort, montée sur la traverse 12 par l'intermédiaire d'un palier 13' et pourvue à son extrémité opposée de crochets ou de tenons 13" destinés à s'accrocher derrière la nervure 14 en position de verrouillage de la caisse 1.

Ainsi, la caisse 1 peut être simplement montée sur son ensemble de support et de roulage par disposition au-dessus des traverses 12 et 15 avec insertion des tenons 9 dans les oeillets 11 et disposition des crochets 10 devant la traverse 12. Ensuite, un déplacement de la caisse vers l'avant de la brouette (en direction de la roue 5) aura pour effet d'engager les tenons 9 avec la partie rétrécie des oeillets 11 par l'intermédiaire de leur gorge, tandis que les crochets 10 s'engagent sous la traverse 12. En fin de parcours d'accrochage, l'extrémité du moyen élastique de verrouillage 13 s'engage, par ses crochets ou tenons 13" derrière la nervure 14 prévue sous le fond de la caisse 1 et verrouillent ainsi cette dernière en position. Pour un démontage de la caisse 1, il suffit simplement de tirer sur la languette formant le moyen 13 pour dégager les tenons ou crochets 13" de leur engagement avec la nervure 14 pour pouvoir effectuer un mouvement inverse de la caisse 1 permettant sa désolidarisation d'avec l'ensemble brancards 2 - pieds 3 - paliers de roue 4 et roue 5.

Ce mode de fixation de la caisse 1 sur l'ensemble brancards 2 - pieds 3 - paliers de roue 4 et roue 5 permet d'éviter la réalisation de trous de fixation dans ladite caisse 1, de sorte que cette dernière est parfaitement étanche. En outre, l'amovibilité de la caisse 1 permet, pour le transport et le stockage, un gerbage d'un grand nombre de caisses en un volume réduit, ce qui entraîne une réduction des coûts correspondants.

Conformément à une autre caractéristique de l'invention, la caisse 1 et le double fond amovible 6 sont avantageusement pourvus sur leur bord avant chacun d'un trou 1'" respectivement 6"' permettant leur accrochage mural. Un tel accrochage mural du double fond 6 et de l'ensemble de la brouette par l'intermédiaire de la caisse 1 permet un gain de place important pour l'utilisateur pendant les périodes de non-utilisation de la brouette.

Grâce à l'invention, il est possible de réaliser une brouette ou analogue démontable, présentant une caisse en matière synthétique d'une grande rigidité et multifonctionnelle. En effet, du fait de la prévision du double fond, la caisse peut servir à plusieurs usages simultanés. Cette grande fonctionnalité est encore améliorée par la prévision d'au moins un bac à outils amovible permettant le rangement de petits accessoires, voire la réception de matériaux.

Enfin, du fait de la prévision du dispositif 1" de réception et de maintien d'outillage, les outils à manches longs ou mi-longs peuvent être disposés de manière optimale sur la brouette sans gène pour la charge ni pour l'utilisateur.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Brouette ou analogue, constituée par une caisse (1) en matière synthétique montée sur un ensemble brancards (2) - pieds (3) - paliers de roue (4) et par une roue (5), **caractérisée en ce que** la caisse (1) présente un bord avec retombée (1)' et est munie, en outre, d'au moins un dispositif (1") de support et de maintien d'outillages, ainsi que d'un double fond amovible (6) épousant les contours internes de la caisse (1) à une certaine distance du fond de celle-ci.

2. Brouette, suivant la revendication 1, **caractérisée en ce que** la caisse (1) présente une hauteur importante par rapport à son volume de chargement.

3. Brouette, suivant la revendication 1, **caractérisée en ce que** le bord de la caisse (1) est pourvu d'un renfort périphérique sous forme d'un canal creux moulé par injection de gaz.

4. Brouette, suivant la revendication 1, **caractérisée en ce que** le double-fond amovible (6) épousant les contours internes de la caisse (1) est également réalisé en matière synthétique rigide et est pourvu, en outre, d'une armature de renforcement et de rigidification (6') sur sa face tournée vers le fond de la caisse (1).

5. Brouette, suivant l'une quelconque des revendications 1 et 4, **caractérisée en ce que** le double-fond amovible (6) est muni, en outre, sur deux côtés opposés, d'ouvertures de préhension (6").

6. Brouette, suivant la revendication 1, **caractérisée en ce que** les dispositifs (1") de support et de maintien d'outillages sont prévus dans les bords transversaux de la caisse (1), près des extrémités de liaison avec les bords longitudinaux et se présentent sous forme d'évidements ménagés dans lesdits bords.

7. Brouette, suivant la revendication 1, **caractérisée en ce que** la caisse (1) est pourvue, en outre, d'un ou de plusieurs bacs à outils amovibles (7) munis d'un moyen d'accrochage (7') sous forme de crochets ou d'un rebord en cornière coopérant avec le bord supérieur de la caisse (1).

8. Brouette, suivant la revendication 1, **caractérisée en ce que** la caisse (1) est montée sur l'ensemble brancards (2) - pieds (3) - paliers de roue (4) et roue (5) de manière amovible, par l'intermédiaire d'un dispositif de fixation rapide (8) essentiellement constitué par des tenons à gorge (9) et des crochets (10) prévus sous le fond de la caisse (1) et coopérant respectivement avec des oeillets (11) et une traverse (12) dudit ensemble brancards (2 )- pieds (3) - paliers de roue (4) et roue (5) et par un moyen élastique de verrouillage (13) prévu sur la traverse (12) et coopérant avec une nervure (14) de la face inférieure du fond de la caisse (1).

9. Brouette, suivant la revendication 8, **caractérisée en ce que** les oeillets (11) coopérant avec les tenons à gorge (9) sont réalisés dans une entretoise en tôle (15) reliant les brancards (2).

10. Brouette, suivant la revendication 8, **caractérisée en ce que** le moyen de verrouillage (13) se présente sous forme d'une patte élastique chargée par ressort, montée sur la traverse (12) par l'intermédiaire d'un palier (13') et pourvue à son extrémité opposée de crochets ou de tenons (13") destinés à s'accrocher derrière la nervure (14) en position de verrouillage de la caisse (1).

11. Brouette, suivant la revendication 1, **caractérisée en ce que** la caisse (1) et le double fond amovible (6) sont pourvus sur leur bord avant chacun d'un trou (1"' respectivement 6"') permettant leur accrochage mural.

## Claims

1. Wheelbarrow or the like, consisting of a body (1) of synthetic material mounted on an assembly of handlebars (2), feet (3), wheel bearings (4) and a wheel (5), **characterised in that** the body (1) has a turned-over edge (1') and is moreover provided with at least one device (1") for the support and holding of tools, as well as a removable double bottom (6) matching the internal contours of the body (1) at a specific distance from the bottom thereof.

2. Wheelbarrow according to claim 1, **characterised in that** the body (1) has a substantial height relative to its loading volume.

3. Wheelbarrow according to claim 1, **characterised in that** the edge of the body (1) is provided with a peripheral reinforcement in the form of a hollow channel moulded by gas injection.

4. Wheelbarrow according to claim 1, **characterised in that** the removable double bottom (6) matching the internal contours of the body (1) is also made of rigid synthetic material and is moreover provided with a reinforcing and rigidifying framework (6') on its surface turned toward the bottom of the body (1).

5. Wheelbarrow according to any one of claims 1 and 4, **characterised in that** the removable double bottom (6) is moreover provided on two opposing sides with gripping openings (6").

6. Wheelbarrow according to claim 1, **characterised in that** the devices (1") for the support and holding of tools are provided in the transverse edges of the body (1), near the ends connecting to the longitudinal edges, and are in the form of recesses provided in said edges.

7. Wheelbarrow according to claim 1, **characterised in that** the body (1) is provided moreover with one or more removable tool pots (7) provided with attachment means (7') in the form of hooks or a corner flange cooperating with the upper edge of the body (1).

8. Wheelbarrow according to claim 1, **characterised in that** the body (1) is mounted on the assembly of handlebars (2), feet (3), wheel bearings (4) and wheel (5) removably, by means of a rapid fixing device (8) basically consisting of waisted pins (9) and hooks (10) provided on the bottom of the body (1) and cooperating respectively with eyelets (11) and a crosspiece (12) of said assembly of handlebars (2), feet (3), wheel bearings (4) and wheel (5) and by resilient locking means (13) provided on the crosspiece (12) and cooperating with a rib (14) on the lower surface of the bottom of the body (1).

9. Wheelbarrow according to claim 8, **characterised in that** the eyelets (11) cooperating with the waisted pins (9) are made in a sheet metal crosspiece (15) connecting the handlebars (2).

10. Wheelbarrow according to claim 8, **characterised in that** the locking means (13) is in the form of a spring-loaded resilient tongue, mounted on the crosspiece (12) by means of a bearing (13') and provided at its opposing end with hooks or pins (13") intended to fasten behind the rib (14) in the locking position of the body (1).

11. Wheelbarrow according to claim 1, **characterised in that** the body (1) and the removable double bottom (6) are each provided on each of their front edges with a hole (1'" respectively 6"') allowing them to be hung on a wall.

## Patentansprüche

1. Schubkarre oder dergleichen, die aus einer Wanne (1) aus Kunststoff, die auf einer Baugruppe aus Längsträgern (2), Füßen (3) und Radlagern (4) angebracht ist, und aus einem Rad (5) gebildet ist, **dadurch gekennzeichnet, dass** die Wanne (1) einen umgebogenen Rand (1') aufweist und außerdem mit wenigstens einer Vorrichtung (1") zum Tragen und Halten von Werkzeugen sowie mit einem entnehmbaren doppelten Boden (6), der sich an die inneren Umrisse der Wanne (1) in einem bestimmten Abstand von ihrem Boden anschmiegt, versehen ist.

2. Schubkarre nach Anspruch 1, **dadurch gekennzeichnet, dass** die Wanne (1) in Bezug auf ihr Ladevolumen eine große Höhe aufweist.

3. Schubkarre nach Anspruch 1, **dadurch gekennzeichnet, dass** der Rand der Wanne (1) mit einer Umfangsverstärkung in Form eines Hohlkanals, der durch Einleiten von Gas geformt wird, versehen ist.

4. Schubkarre nach Anspruch 1, **dadurch gekennzeichnet, dass** der entnehmbare doppelte Boden (6), der sich an die inneren Umrisse der Wanne (1) anschmiegt, ebenfalls aus einem starren Kunststoff verwirklicht ist und außerdem an seiner zum Boden der Wanne (1) gerichteten Fläche mit einer Verstärkungs- und Versteifungsbewehrung (6') versehen ist.

5. Schubkarre nach einem der Ansprüche 1 und 4, **dadurch gekennzeichnet, dass** der entnehmbare doppelte Boden (6) außerdem an zwei gegenüberliegenden Seiten mit Greiföffnungen (6") versehen ist.

6. Schubkarre nach Anspruch 1, **dadurch gekennzeichnet, dass** die Vorrichtungen (1") zum Tragen und Halten von Werkzeugen in den transversalen Rändern der Wanne (1) in der Nähe der Verbindungsenden mit den longitudinalen Rändern vorgesehen sind und die Form von in den Rändern ausgesparten Ausnehmungen haben.

7. Schubkarre nach Anspruch 1, **dadurch gekennzeichnet, dass** die Wanne (1) außerdem mit einem oder mehreren Behältern (7) für entnehmbare Werkzeuge versehen ist, die mit einem Einhakmittel (7') in Form von Haken oder eines angewinkelten Umschlags, die mit dem oberen Rand der Wanne (1) zusammenwirken, versehen sind.

8. Schubkarre nach Anspruch 1, **dadurch gekennzeichnet, dass** die Wanne (1) auf der Baugruppe aus Längsträgern (2), Füßen (3), Radlagern (4) und Rad (5) mittels einer Schnellbefestigungsvorrichtung (8) lösbar angebracht ist, die im Wesentlichen aus Nutzapfen (9) und Haken (10), die unter dem Boden der Wanne (1) vorgesehen sind und mit Ösen (11) bzw. einer Querstrebe (12) der Baugruppe aus Längsträgern (2), Füßen (3), Radlagern (4) und Rad zusammenwirken, und aus einem elastischen Verriegelungsmittel (13), das an der Querstrebe (12) vorgesehen ist und mit einer Rippe (14) der unteren Fläche des Bodens der Wanne (1) zusammenwirkt, gebildet ist.

9. Schubkarre nach Anspruch 8, **dadurch gekennzeichnet, dass** die Ösen (11), die mit den Nutzapfen (9) zusammenwirken, in einem die Längsträger (2) verbindenden Blech-Abstandshalter (15) verwirklicht sind.

10. Schubkarre nach Anspruch 8, **dadurch gekennzeichnet, dass** das Verriegelungsmittel (13) die Form eines elastischen Ansatzes aufweist, der durch eine Feder vorbelastet ist und an der Querstrebe (12) über ein Lager (13') angebracht ist und an seinem gegenüberliegenden Ende mit Haken oder Zapfen (13") versehen ist, die dazu bestimmt sind, sich hinter der Rippe (14) in der Verriegelungsposition der Wanne (1) einzuhaken.

11. Schubkarre nach Anspruch 1, **dadurch gekennzeichnet, dass** die Wanne (1) und der entnehmbare doppelte Boden (6) an ihrem vorderen Rand jeweils mit einem Loch (1"' bzw. 6"') versehen sind, die ermöglichen, sie an einer Wand aufzuhängen.
